# EUROPEAN PATENT APPLICATION

(11) **EP 2 991 346 A1**
(43) Date of publication of application: **02.03.2016**
(21) Application number: 14882502.9
(22) Date of filing: 08.04.2014
(51) Int. Cl.: H04N 9/31

(54) **REMOTE PROJECTION METHOD, DEVICE AND SYSTEM**

(30) Priority: 11.02.2014 CN 201410047298
(71) Applicant: ZTE Corporation, Shenzhen City, Guangdong Province 518057 (CN)
(72) Inventor: JIA, Xin, Shenzhen Guangdong province 518057 (CN); XIE, Wei, Shenzhen Guangdong provence 518057 (CN)
(74) Representative: Novagraaf Technologies
(86) International application number: PCT/CN2014/074930
(87) International publication number: WO 2015/120659

(57) **Abstract**

Provided are a remote projection method, apparatus and system. The method includes: receiving a wireless connection establishment request from a remote terminal; establishing a wireless connection with the remote terminal according to the wireless connection establishment request; receiving, from the remote terminal through the wireless connection, an image to be projected and a corresponding relationship between an imaging size of an object in the image to be projected and an actual size of the object; acquiring a projection distance; and projecting the image to be projected for display through a projection lens according to the projection distance, the image to be projected and the corresponding relationship between the imaging size of the object in the image to be projected and the actual size of the object. Through the technical solution provided, the image to be projected can be projected according to the projection distance and the corresponding relationship, which is received from the remote terminal, between the imaging size of the object in the image to be projected and the actual size of the object, so that the inconvenience brought to a user since he/she cannot directly view the volume, size and the like of a remote scenario is avoided, and the user experience is improved.

## Description

### Technical Field

The present disclosure relates to the field of communications, in particular to a remote projection method, apparatus and system.

### Background

At present, application of projectors has been popularized, and the projector is not only an excellent assistant for people in work and conference, but also usually appears in the family and daily life. A traditional projector is excellent in performance and high in degree of specialization, but is large in volume, inconvenient to carry, and complex to connect, therefore, the traditional projector cannot meet the existing and fast office mode nowadays due to the limit of using conditions.

In many scenarios, a user at the remote end needs to transmit the scenario information acquired currently, such as audio or video information, to a local user in real time for projection and sharing. However, for some scenarios, the user at the remote end cannot easily know the real experience of the remote scenario through an audio or video description. For example, when a color TV is demonstrated in a remote scenario, the local user cannot easily see the real condition of the color TV intuitively through audio and video information parameters, such as whether the actual size of the color TV is suitable for the actual situation of his/her family, namely, it is very difficult to display the real condition of a remote object intuitively.

### Summary

To solve the technical problem, the embodiments of the present disclosure provide a remote projection method, apparatus and system, by which an image to be projected can be projected according to the information of the image to be projected which is received from a remote terminal and a projection distance, the inconvenience brought to a user since he/her cannot directly view the volume, size and the like of a remote object is avoided, and the user experience is improved.

An embodiment of the present disclosure provides a remote projection method, which is applied to a projection device and includes: a wireless connection establishment request is received from a remote terminal; wireless connection is established with the remote terminal according to the wireless connection establishment request; an image to be projected and a corresponding relationship between an imaging size of an object in the image to be projected and an actual size of the object are received from the remote terminal through the wireless connection; a projection distance is acquired; and the image to be projected is projected for display through a projection lens according to the projection distance, the image to be projected and the corresponding relationship between the imaging size of the object in the image to be projected and the actual size of the object.

In an example embodiment, projecting the image to be projected for display through the projection lens according to the projection distance, the image to be projected and the corresponding relationship between the imaging size of the object in the image to be projected and the actual size of the object includes: information about the actual size of the object in the image to be projected is acquired according to the image to be projected and the corresponding relationship between the imaging size of the object in the image to be projected and the actual size of the object; a display size of the image to be projected is adjusted according to the projection distance and the acquired information about the actual size of the object in the image to be projected; and the image to be projected which has been adjusted is projected for display through the projection lens.

In an example embodiment, after the image to be projected is projected for display through the projection lens according to the projection distance, the image to be projected and the corresponding relationship between the imaging size of the object in the image to be projected and the actual size of the object, the method further includes: an operating instruction is received from a user; and projection display of the image to be projected is controlled according to the operating instruction.

In an example embodiment, a bearer channel of the wireless connection includes: WI-FI, Digital Living Network Alliance (DLAN), 3G and/or LTE.

In an example embodiment, a bearer protocol of the wireless connection includes: a Packet Switched (PS) domain and/or a Circuit Switched (CS) domain.

Another embodiment of the present disclosure provides a remote projection apparatus, which is applied to a projection device and includes: a first receiving component, which is configured to receive a wireless connection establishment request from a remote terminal; a wireless connection establishment component, which is configured to establish a wireless connection with the remote terminal according to the wireless connection establishment request; a second receiving component, which is configured to receive, from the remote terminal through the wireless connection, an image to be projected and a corresponding relationship between an imaging size of an object in the image to be projected and an actual size of the object; a distance acquisition component, which is configured to acquire a projection distance; and a projection component, which is configured to project the image to be projected for display through a projection lens according to the projection distance, the image to be projected and the corresponding relationship between the imaging size of the object in the image to be projected and the actual size of the object.

In an example embodiment, the projection component includes: an acquisition element, which is configured to acquire information about the actual size of the object in the image to be projected according to the image to be projected and the corresponding relationship between the imaging size of the object in the image to be projected and the actual size of the object; an adjustment element, which is configured to adjust a display size of the image to be projected according to the projection distance and the acquired information about the actual size of the object in the image to be projected; and a projection element, which is configured to project the image to be projected which has been adjusted for display through the projection lens.

In an example embodiment, the remote projection apparatus further includes: a third receiving component, which is configured to receive an operating instruction from a user; and a control component, which is configured to control, according to the operating instruction, the projection display of the image to be projected.

Another embodiment of the present disclosure provides a remote projection system, including: a projection device and a remote terminal, wherein the remote terminal is configured to send a wireless connection establishment request to the projection device and send, to the projection device through a wireless connection established with the projection device, an image to be projected and a corresponding relationship between an imaging size of an object in the image to be projected and an actual size of the object; and the projection device includes: a communication component, which is configured to receive the wireless connection establishment request from the remote terminal, establish the wireless connection with the remote terminal according to the wireless connection establishment request, and receive, from the remote terminal through the wireless connection, the image to be projected and the corresponding relationship between the imaging size of the object in the image to be projected and the actual size of the object, a processor, which is configured to acquire a projection distance, and project the image to be projected for display through a projection lens according to the projection distance, the image to be projected and the corresponding relationship between the imaging size of the object in the image to be projected and the actual size of the object, and the projection lens, which is configured to project the image to be projected for display.

The technical solution of the embodiments of the present disclosure has the following advantages:
through the remote projection method, terminal and system provided by the embodiments of the present disclosure, the image to be projected can be projected according to the information of the image to be projected which is received from the remote terminal and the projection distance, so that the inconvenience brought to a user since he/her cannot directly view the volume, size and the like of a remote object is avoided, and the user experience is improved.

### Brief Description of the Drawings

Fig. 1 is a flowchart of a remote projection method according to a first embodiment of the present disclosure;
Fig. 2 is a diagram showing a wireless connection protocol in an example embodiment of the present disclosure;
Fig. 3 is a diagram showing the structure of a remote projection terminal according to a first embodiment of the present disclosure;
Fig. 4 is a diagram showing the structure of a remote projection terminal according to a second embodiment of the present disclosure; and
Fig. 5 is a diagram showing the structure of a remote projection system according to a first embodiment of the present disclosure.

### Detailed Description of the Embodiments

To describe the technical problem to be solved, the technical solution and advantages of the present disclosure more clearly, the present disclosure is described below in combination with the accompanying drawings and the embodiments in detail.

In order to solve the problem that the real condition of a remote scenario cannot be displayed intuitively during the remote projection in the related art, the embodiments of the present disclosure provide a remote projection method, apparatus and system, by which an image to be projected can be projected according to the information of the image to be projected which is received from a remote terminal and a projection distance, the inconvenience brought to a user since he/her cannot directly view the volume, size and the like of a remote object is avoided, and the user experience is improved.

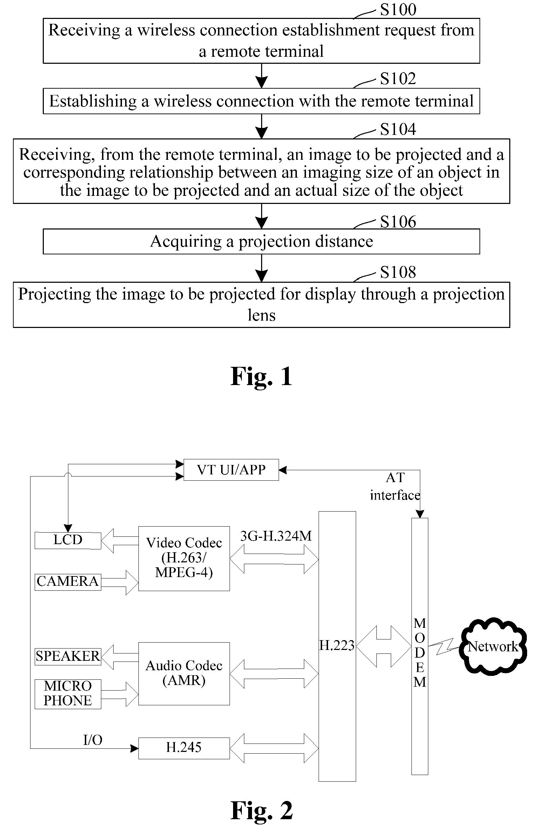

Fig. 1 is a flowchart of a remote projection method according to a first embodiment of the present disclosure, as shown in Fig. 1, the method includes the following steps S100 to S108.

In step S100: A wireless connection establishment request is received from a remote terminal.

In step S102: Wireless connection is established with the remote terminal according to the wireless connection establishment request.

In step S104: An image to be projected and a corresponding relationship between an imaging size of an object in the image to be projected and an actual size of the object are received from the remote terminal through the wireless connection.

In step S106: A projection distance is acquired.

In step S108: The image to be projected is projected for display through a projection lens according to the projection distance, the image to be projected and the corresponding relationship between the imaging size of the object in the image to be projected and the actual size of the object.

In the technical solution, wireless connection is established with the remote terminal according to the wireless connection establishment request sent by the remote terminal, an image to be projected and a corresponding relationship between an imaging size of an object in the image to be projected and an actual size of the object are received from the remote terminal through the wireless connection, the projection distance is acquired, and the image to be projected is projected for display through a projection lens according to the projection distance, the image to be projected and the corresponding relationship between the imaging size of the object in the image to be projected and the actual size of the object. Because the projection display is carried out according to the projection distance, the image to be projected and the corresponding relationship between the imaging size of the object in the image to be projected and the actual size of the object, namely, the projection distance, the image to be projected and the corresponding relationship between the imaging size of the object in the image to be projected and the actual size of the object are combined for the projection display of the image to be projected, and the object in the image displayed by projection has the same volume with the object in the image to be projected remotely, namely, the user can intuitively view the volume of the object in the image to be projected remotely, so that the inconvenience brought to a user since he/her cannot directly view the volume, size and the like of a remote object is avoided, and the user experience is improved.

In an example embodiment, projecting the image to be projected for display through the projection lens according to the projection distance, the image to be projected and the corresponding relationship between the imaging size of the object in the image to be projected and the actual size of the object may include: information about the actual size of the object in the image to be projected is acquired according to the image to be projected and the corresponding relationship between the imaging size of the object in the image to be projected and the actual size of the object; a display size of the image to be projected is adjusted according to the projection distance and the acquired information about the actual size of the object in the image to be projected; and the image to be projected which has been adjusted is projected for display through the projection lens.

In the technical solution, during the projection display of the image to be projected, information about the actual size of the object in the image to be projected is acquired according to the image to be projected and the corresponding relationship between the imaging size of the object in the image to be projected and the actual size of the object; and the display size of the image to be projected is adjusted according to the acquired information about the actual size of the object in the image to be projected and the projection distance, so that the size of the object in the image displayed by projection is the same as the acquired information about the actual size of the object in the image to be projected.

The remote terminal may acquire the corresponding relationship between the imaging size of the object in the image to be projected and the actual size of the object in various ways. For example, the remote terminal acquires the image to be projected via a camera, and also acquires the distance between the object and the camera of the remote terminal via infrared light or other apparatuses which can sense the object, so as to obtain the corresponding relationship between the imaging size of the object in the image to be projected and the actual size of the object; and the information about the actual size of the object can be obtained according to the imaging size of the object in the image to be projected and the distance between the object and the camera.

The projection distance may also be acquired in various ways. For example, the projection distance is detected by a distance sensor; and the size of a projected surface is adjusted according to the projection distance and the information about the actual size of the object in the image to be projected, thus, the size of the object in the image displayed by projection is consistent with the actual size of the object in the image to be projected, namely, the volume of the object in the image to be projected can be displayed intuitively.

During the projection display of the image to be projected, the user usually cannot view the projection for a long time, namely, the projection display needs pause or other control operation.

To solve the problem, in an example embodiment, after the image to be projected is projected for display through the projection lens according to the projection distance, the image to be projected and the corresponding relationship between the imaging size of the object in the image to be projected and the actual size of the object, the method may further include: an operating instruction is received from a user; and projection display of the image to be projected is controlled according to the operating instruction.

In the technical solution, during the projection display of the image to be projected, the operating instruction can be received from the user, and the projection display can be controlled according to the operating instruction of the user. For example, the projection display may be paused or restarted. Thus, the user operating requirement on the view of the projection is met, and the user experience is improved.

### For example,

The operating instruction of the user may be a background execution instruction. After the operating instruction is received, the projection display is transferred to the background to be executed according to the instruction, so that the user can execute other operations without influencing the projection display and the adjustment on the projected content.

The operating instruction of the user may be a display stop instruction. When the operating instruction is received, the projection display is closed and the projection stops.

In an example embodiment, a bearer channel of the wireless connection may include: WI-FI, DLAN, 3G and/or LTE.

In the technical solution, the bearer channel of the wireless connection includes a local WLAN or a cellular communication network for implementing the connection and communication with the remote terminal, and includes but is not limited to WI-FI, DLAN, 3G and/or LTE.

In an example embodiment, a bearer protocol of the wireless connection may include: a PS domain and/or a CS domain.

In the technical solution, the bearer protocol of the wireless connection may include a communication connection way of a PS domain and/or a communication connection way of a CS domain. For example, the bearer protocol of the wireless connection may be a mature video telephone protocol to ensure that the audio or video picture information acquired by the remote terminal can be received in real time from the remote terminal. Apart from the video telephone protocol in the CS domain, a video call setup protocol based on the SIP, a point-to-point establishment protocol based on the TCP/IP and the like may also be used for the communication connection way in the PS domain. It should be noted that any bearer protocol which is able to implement the real-time sharing of the audio or video picture and other information between the remote terminal and a projection terminal can serve as the bearer protocol of the wireless connection.

Fig. 2 is a diagram showing a wireless connection protocol in an example embodiment of the present disclosure. As shown, the 3G-H.324M protocol can be utilized, which is a framework standard stipulated by the 3GPP. In the 3G network, some real-time applications can be implemented through the 3G-H.324M protocol, including video conference, remote wireless monitoring, and video on demand. The 3G-H.324M is a standard system, including the following sub-protocol standards: Audio Codec (AMR), Video Codec (H.263/MPEG-4), multiplexing and separation standard (H.223) and call control standard (H.245). The H.223 stipulates an application standard for multiplexing multiple audio and video signals in a single mobile communication channel. The H.245 stipulates a message control switching standard for a session in each stage.

As shown in Fig. 2, related data information is acquired from a network through a modem and is sent to a Visible Terminal (VT) through an AT interface; moreover, the related data information is demultiplexed to the receiving queue of each logical channel, i.e., a control message channel corresponding to the call control standard, a video channel corresponding to the video encoding standard and an audio channel corresponding to the audio encoding standard, according to the H.223. Each User Interface (UI) or Application (APP) of the VT extracts a control message or media data from each logical channel and then processes the control message or media data; and the processed audio information may be played by a micro phone, and the processed video information may be displayed by an LCD. Audio information acquired by a speaker and video information acquired by a camera can be sent to the network by an inverse process.

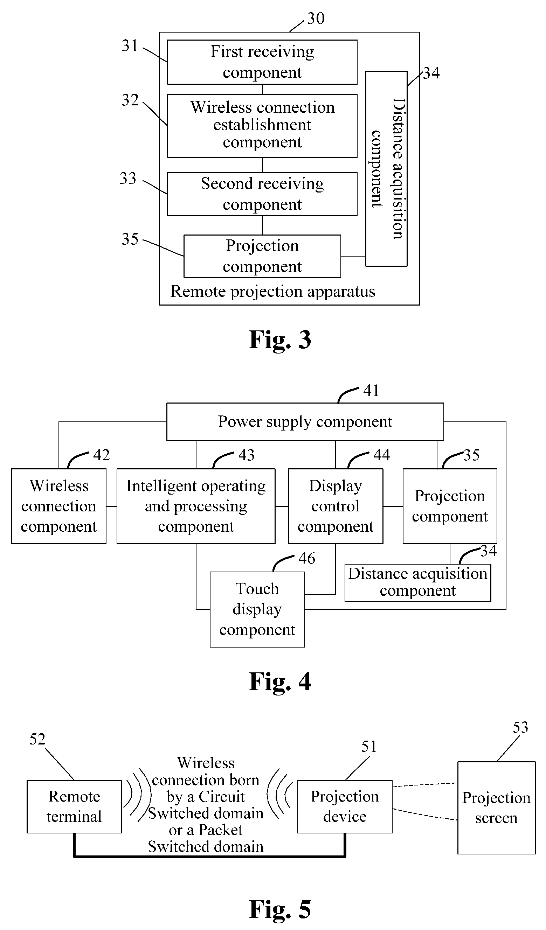

Fig. 3 is a diagram showing the structure of a remote projection apparatus according to a first embodiment of the present disclosure. As shown, the remote projection apparatus 30 includes:
a first receiving component 31, which is configured to receive a wireless connection establishment request from a remote terminal; a wireless connection establishment component 32, which is configured to establish a wireless connection with the remote terminal according to the wireless connection establishment request; a second receiving component 33, which is configured to receive, from the remote terminal through the wireless connection, an image to be projected and a corresponding relationship between an imaging size of an object in the image to be projected and an actual size of the object; a distance acquisition component 34, which is configured to acquire a projection distance; and a projection component 35, which is configured to project the image to be projected for display through a projection lens according to the projection distance, the image to be projected and the corresponding relationship between the imaging size of the object in the image to be projected and the actual size of the object.

In an example embodiment, the projection component may include: an acquisition element, which is configured to acquire information about the actual size of the object in the image to be projected according to the image to be projected and the corresponding relationship between the imaging size of the object in the image to be projected and the actual size of the object; an adjustment element, which is configured to adjust a display size of the image to be projected according to the projection distance and the acquired information about the actual size of the object in the image to be projected; and a projection element, which is configured to project the image to be projected which has been adjusted for display through the projection lens.

In an example embodiment, the remote projection apparatus may further include: a third receiving component, which is configured to receive an operating instruction from a user; and a control component, which is configured to control, according to the operating instruction, the projection display of the image to be projected.

Fig. 4 is a diagram showing the structure of a remote projection apparatus according to a second embodiment of the present disclosure. As shown, the remote projection apparatus includes:
a power supply component 41, which is configured to supply power to each power consuming component of the remote projection apparatus; a wireless connection component 42, which can implement the functions of the first receiving component and the wireless connection establishment component in the first embodiment of the present disclosure and is configured to receive a wireless connection establishment request from a remote terminal and establish a wireless connection with the remote terminal according to the wireless connection establishment request; an intelligent operating and processing component 43, which can implement the function of the second receiving component in the first embodiment of the present disclosure, is configured to receive an image to be projected and the information of the image to be projected from the remote terminal through the wireless connection, and may be further configured to process data, including encoding and decoding the information of the image to be projected to generate a video signal for projection display, and processing the received operating instruction of the user to generate a control signal to control the projection display, and outputting the control signal and the video signal to a display control component 44; the display control component 44, which is configured to output the received video signal to the projection component to display the video signal, and control the projection display according to the received control signal; a distance acquisition component 34, which is configured to acquire a projection distance; a projection component 35, which is configured to project the image to be projected for display through a projection lens according to the projection distance and the received video signal; and a touch display component 46, which is configured to display a user operation interface, receive the operation instruction of the user, the touch display component 46 includes but is not limited to a touchable display screen, a display screen drive and the like.

Another embodiment of the present disclosure further provides a remote projection system, including: a projection device and a remote terminal, wherein the remote terminal is configured to send a wireless connection establishment request to the projection device and send, to the projection device through a wireless connection established with the projection device, an image to be projected and a corresponding relationship between an imaging size of an object in the image to be projected and an actual size of the object; and the projection device includes: a communication component, which is configured to receive the wireless connection establishment request from the remote terminal, establish the wireless connection with the remote terminal according to the wireless connection establishment request, and receive, from the remote terminal through the wireless connection, the image to be projected and the corresponding relationship between the imaging size of the object in the image to be projected and the actual size of the object, a processor, which is configured to acquire a projection distance, and project the image to be projected for display through a projection lens according to the projection distance, the image to be projected and the corresponding relationship between the imaging size of the object in the image to be projected and the actual size of the object, and the projection lens, which is configured to project the image to be projected for display.

Fig. 5 is a diagram showing the structure of a remote projection system according to a first embodiment of the present disclosure. As shown, the system includes:
a projection device 51, which is configured to establish a wireless connection with a remote terminal 52 according to a wireless connection request of the remote terminal 52, receive an image to be projected and a corresponding relationship between an imaging size of an object in the image to be projected and an actual size of the object from the remote terminal 52, acquire a projection distance, and project the image to be projected for display according to the projection distance, the image to be projected and the corresponding relationship between the imaging size of the object in the image to be projected and the actual size of the object, wherein the projection distance is the distance between the projection device 51 and a projection screen 53; the remote terminal 52, which is configured to acquire the image to be projected and the corresponding relationship between the imaging size of the object in the image to be projected and the actual size of the object, and send the image to be projected and the corresponding relationship between the imaging size of the object in the image to be projected and the actual size of the object to the projection device 51 through the wireless connection, wherein the wireless connection may be born by a Circuit Switched domain or a Packet Switched domain; and the projection screen 53, which is configured to display the projected image, namely, the projection device 51 projects the image to be projected onto the projection screen 53 to display the image. Of course, the remote projection system may also not include the projection screen 53; and the projection device 51 may project the image to be projected onto a wall to display the image.

What said above are only the example embodiments of the present disclosure, and it should be mentioned that many improvements and modifications can be made by those skilled in the art within the principle of the present disclosure and shall fall within the scope of protection of the present disclosure.

### Industrial Applicability

As described above, the remote projection method, apparatus and system provided by embodiments of the present disclosure have the following beneficial effects: the image to be projected can be projected according to the corresponding relationship, received by the remote terminal, between the imaging size of the object in the image to be projected and the actual size of the object and the projection distance, so that the inconvenience brought to a user since he/her cannot view the volume, size and the like of a remote scenario directly can be avoided, and the user experience is improved.

## Claims

1. A remote projection method, which is applied to a projection device and comprises:
receiving a wireless connection establishment request from a remote terminal;
establishing a wireless connection with the remote terminal according to the wireless connection establishment request;
receiving, from the remote terminal through the wireless connection, an image to be projected and a corresponding relationship between an imaging size of an object in the image to be projected and an actual size of the object;
acquiring a projection distance; and
projecting the image to be projected for display through a projection lens according to the projection distance, the image to be projected and the corresponding relationship between the imaging size of the object in the image to be projected and the actual size of the object.

2. The method as claimed in claim 1, wherein projecting the image to be projected for display through the projection lens according to the projection distance, the image to be projected and the corresponding relationship between the imaging size of the object in the image to be projected and the actual size of the object comprises:
acquiring information about the actual size of the object in the image to be projected according to the image to be projected and the corresponding relationship between the imaging size of the object in the image to be projected and the actual size of the object;
adjusting a display size of the image to be projected according to the projection distance and the acquired information about the actual size of the object in the image to be projected; and
projecting the image to be projected which has been adjusted for display through the projection lens.

3. The method as claimed in claim 1, wherein after the image to be projected is projected for display through the projection lens according to the projection distance, the image to be projected and the corresponding relationship between the imaging size of the object in the image to be projected and the actual size of the object, the method further comprises:
receiving an operating instruction from a user; and
controlling, according to the operating instruction, the projection display of the image to be projected.

4. The method as claimed in any one of claims 1 to 3, wherein a bearer channel of the wireless connection comprises: Wireless Fidelity, WI-FI, Digital Living Network Alliance, DLAN, 3G and/or Long Term Evolution, LTE.

5. The method as claimed in any one of claims 1 to 3, wherein a bearer protocol of the wireless connection comprises: a Packet Switched, PS, domain and/or a Circuit Switched, CS, domain.

6. A remote projection apparatus, which is applied to a projection device and comprises:
a first receiving component, which is configured to receive a wireless connection establishment request from a remote terminal;
a wireless connection establishment component, which is configured to establish a wireless connection with the remote terminal according to the wireless connection establishment request;
a second receiving component, which is configured to receive, from the remote terminal through the wireless connection, an image to be projected and a corresponding relationship between an imaging size of an object in the image to be projected and an actual size of the object;
a distance acquisition component, which is configured to acquire a projection distance; and
a projection component, which is configured to project the image to be projected for display through a projection lens according to the projection distance, the image to be projected and the corresponding relationship between the imaging size of the object in the image to be projected and the actual size of the object.

7. The apparatus as claimed in claim 6, wherein the projection component comprises:
an acquisition element, which is configured to acquire information about the actual size of the object in the image to be projected according to the image to be projected and the corresponding relationship between the imaging size of the object in the image to be projected and the actual size of the object;
an adjustment element, which is configured to adjust a display size of the image to be projected according to the projection distance and the acquired information about the actual size of the object in the image to be projected; and
a projection element, which is configured to project the image to be projected which has been adjusted for display through the projection lens.

8. The apparatus as claimed in claim 6, further comprising:
a third receiving component, which is configured to receive an operating instruction from a user; and
a control component, which is configured to control, according to the operating instruction, the projection display of the image to be projected.

9. A remote projection system, comprising: a projection device and a remote terminal, wherein
the remote terminal is configured to send a wireless connection establishment request to the projection device and send, to the projection device through a wireless connection established with the projection device, an image to be projected and a corresponding relationship between an imaging size of an object in the image to be projected and an actual size of the object; and
the projection device comprises:
a communication component, which is configured to receive the wireless connection establishment request from the remote terminal, establish the wireless connection with the remote terminal according to the wireless connection establishment request, and receive, from the remote terminal through the wireless connection, the image to be projected and the corresponding relationship between the imaging size of the object in the image to be projected and the actual size of the object,
a processor, which is configured to acquire a projection distance, and project the image to be projected for display through a projection lens according to the projection distance, the image to be projected and the corresponding relationship between the imaging size of the object in the image to be projected and the actual size of the object; and
the projection lens, which is configured to project the image to be projected for display.
